# EUROPEAN PATENT SPECIFICATION

(11) **EP 2 364 912 B1**
(45) Date of publication and mention of the grant of the patent: **24.04.2013**
(21) Application number: 10155949.0
(22) Date of filing: 09.03.2010
(51) Int. Cl.: B64F 1/36, G01T 1/167, G01V 5/00

(54) **Equipment for inspecting persons and luggage for accessing restricted areas**
Vorrichtung zur Personen- und Gepäckinspektion für den Zugang zu eingeschränkten Bereichen
Dispositif pour l'inspection des personnes et des bagages pour accès aux zones réglementées

(43) Date of publication of application: 14.09.2011
(73) Proprietor: Dinamic Manutenció del Bages, S.A., 08251 Santpedor (Barcelona) (ES); Digital Aeronautics Engineering Services, S.L., 08193 Bellaterra (Barcelona) (ES)
(72) Inventor: Piera Eroles, Miquel Ángel, 08193, Bellaterra (Barcelona) (ES); Ramos Gonzales, Juan José, 08193, Bellaterra (Barcelona) (ES); Pasquet Golobart, Ignasi, 08251, Santpedor (Barcelona) (ES)
(74) Representative: Pons Ariño, Angel

(56) References cited:
- FR-A1- 2 804 404
- US-A1- 2004 189 469
- US-A1- 2005 057 354
- US-A1- 2009 038 998

## Description

### OBJECT OF THE INVENTION

The main object of the present invention is equipment for inspecting persons and luggage for accessing restricted areas in airports and such like, wherein security must be guaranteed.

The equipment for inspecting persons and luggage for accessing restricted areas object of the present invention improves the effective capacity of these security checkpoints, improving the quality factors, such as, for example, the waiting time of passengers in queue, and the optimization of the technical resources, such as walk through gate detectors and X-Ray machines. The present equipment permits, on the one hand, the advancement of luggage and persons at a previously established pace and, on the other hand, the re-direction of the main flow of all those pieces of luggage which can slow down the regular operation of the equipment.

### BACKGROUND OF THE INVENTION

In general, airports, ports, official buildings and such like are subjected to loads of people at the entrance point which causes waiting queues at the security checkpoints, causing non-fulfilment of the quality factors defined by said bodies. Said security checkpoints are comprised of an X-Ray machine to inspect the hand luggage that the person is going to bring into the restricted area and a walk through gate detector to inspect the person himself, all of that in order to prevent the entry of weapons and explosive substances into said facilities.

These security checkpoints, when they are subjected to large passenger volumes, cause unending queues with their corresponding delays, which represents a big problem in managing the mobility of the passengers inside the airport.

The service quality offered by airports to their passengers is the result of the relationship between the processing capacity of security checkpoints and the passenger arrival curve which must take the following into account:
■ Passengers in transit.
■ Wave effect, due to the arrival of passengers en masse, and much earlier than their flights (tour operators).
■ Advance in arrival time of the passenger, which varies depending on the time of day and the destination.
■ Load between the different unbalanced security checkpoints.
■ Check-in efficiency.

Given the flight schedules on the busiest days, and given the characteristics of passenger arrivals, mainly the wave effect, it is necessary to guarantee that the security checkpoints provide the effective capacity to fulfil the quality factors established by the airport.

The problem of the waiting queues for passing through the security checkpoints is further complicated when a passenger or hand luggage is carrying a suspicious object, which forces stoppage of the passenger flow through the security checkpoints. The suspicious passenger or luggage must be separately inspected by an agent, temporarily blocking the access of passengers through the security checkpoints.

Document FR 2 804 404 A1 discloses an equipment for inspecting persons and luggage for accessing restricted areas comprising an inspection area for the passengers and the flight luggage, wherein a conveyor receives the flight luggage and is controlled by a control circuit and a detector senses illicit luggage on the conveyor further comprising a hand baggage receiving zone having a feed to transfer the hand luggage onto the main conveyor upstream of the detection zone to allow the latter to operate on both types of luggage.

### DESCRIPTION OF THE INVENTION

The equipment for inspecting persons and luggage for accessing restricted areas proposed by the invention resolves the previously stated problem by minimizing the waiting queues while at the same time optimizing the technical and human resources at said security checkpoints.

To do this, and more specifically, the equipment for inspecting persons and luggage for accessing restricted areas comprises an X-Ray machine for controlling the content of hand luggage and a metal detecting device, preferably a walk through gate detector to detect the presence of metal objects on people, the additional equipment whereof comprising:
- an admission conveyor provided with motorized means for moving the trays containing the person's baggage and personal objects, disposed at the entrance of the X-Ray machine, of a length between 5 and 15 metres,
- the walk through gate detector being in an upstream position with respect to the X-Ray machine to create a personal inspection area wherein the individual inspection of the person carrying a metal object can be carried out, as well as the introduction of an additional tray with the metal objects detected, on the admission conveyor, on a section before the X-Ray machine,
- a collection conveyor for collecting the trays containing luggage and personal objects, disposed at the outlet of the X-Ray machine, of a length between 2 and 15 metres,
- a secondary conveyor of a length between 2 and 3 metres, disposed parallel to the tray collection conveyor, right after the X-Ray machine, provided with means for transferring the trays from the collection conveyor to the secondary conveyor, in order to re-direct the trays with suspicious luggage for their additional inspection.

The person will begin the inspection process in this way, placing a tray at the beginning of the admission conveyor, whereon they will place their hand luggage and all of their personal objects, while the tray automatically advances along the admission conveyor, until its arrival at the X-Ray machine. The length of said conveyor is between 5 and 15 metres, in order to give the passenger time to place all of their personal objects thereon. The admission process is continuous given that the following passenger has to place their tray behind that of the previous passenger, and so on and so forth while the trays move along the admission conveyor.

The motorized means for moving the trays along the admission conveyor comprises a plurality of rollers provided with a rotational drive motor, where each motorized roller acts on up to 9 free rollers, by means of successive belts.

Likewise, in must be pointed out that the movement speed of the trays along the admission conveyor, determined by motorized means, is between 0.10 metres/second and 0.30 metres/second. In this manner, acting on the drive motors of the rollers, we regulate the advancement speed of the trays along the admission conveyor, and therefore the admission flow of persons, and the time they have available to place their belongings in the tray. The invention quantitatively determines the relationship between the different lengths and speeds of the motorized elements to guarantee the effective capacity of the process which is required at security checkpoints.

Once the person has placed their personal objects in the tray disposed on the admission conveyor, they must pass through the walk through gate detector for body search, in order to detect possible suspicious elements on the person himself. In the event that the person and their baggage do not contain suspicious objects, they will pass through the security checkpoint and will collect their luggage and personal objects from the tray, at the collection conveyor. This conveyor, in order to facilitate the collection of luggage and personal objects, is between 2 and 15 metres long.

The arrangement of said conveyors at the entrance and exit of the security checkpoint allows the inspection of persons and luggage to be sped up and the pace to be controlled, as stops in the main flow are not produced due to incidents or hold-ups of the passenger himself.

In the event that an incident occurs in the walk through gate detector because the person is carrying an object that has caused the alarm to go off, this person is taken aside from the main flow so as to not block the entrance of the people behind them, and directed to the personal inspection area to be inspected individually. Said personal inspection area comprises a table whereon to place the metal objects detected during this individual inspection, and a device for transferring these to the admission conveyor, on the section before the X-Ray machine. This way, the person that has set off the walk through gate detector alarm does not have to go back through said test again, and the objects detected are placed on the admission conveyor for their inspection through the X-Ray machine, without having to start over again. By proceeding in this manner, the tray with the objects detected during the individual inspection can be inserted into the flow of trays with luggage on the admission conveyor, achieving a greater proximity to the trays carrying the main luggage of the person who set off the alarm. This same person, after having passed through the individual complementary inspection, passes the security checkpoint and picks up their corresponding trays from the collection conveyor.

The previously mentioned device for transferring trays comprises a series of articulated arms provided with a plurality of wheels to facilitate movement, which are actuated by means of electric or pneumatic linear actuators which emerge from the table and move the trays towards the admission conveyor for their inspection in the X-Ray machine.

On the other hand, the collection conveyor comprises a plurality of free rotational rollers, the conveyor whereof being provided with a slight descending slope for the movement of the trays via gravity.

The trays placed on the admission conveyor are driven to the entrance of the X-Ray machine to be inspected by security personnel. In the event that the presence of suspicious objects is detected in a piece of luggage, the inspector will actuate the transfer device to direct the tray carrying the suspicious objects to the secondary conveyor. Said device comprises a series of articulated arms provided with a plurality of wheels to facilitate their movement, which are actuated by means of electric or pneumatic linear actuators, the ends whereof emerging from between the rollers of the collection conveyor, disposed at the outlet of the X-Ray machine, and which move the trays towards the secondary conveyor to be additionally inspected by security personnel.

For a better management and control of the trays containing the luggage, the admission conveyor comprises retractable retainers which emerge from between the rollers, which are actuated by electric or pneumatic linear actuators, to slow down and measure out the advancement of the trays to the entrance of the X-Ray machine. Said retractable retainers are disposed before the personal inspection area to permit the introduction of the new trays with the objects detected during the personal inspection. Likewise, the collection conveyor also comprises a retractable retainer which emerges from between the rollers, also actuated by an electric or pneumatic linear actuator to prevent the trays containing suspicious objects from being sent to the outlet of the X-Ray machine, disposed behind the device which transfers the trays to the secondary conveyor.

Finally, it must be indicated that the equipment for inspecting persons and luggage additionally comprises a conveyor belt for returning the empty trays from the final end of the collection conveyor to the starting end of the admission conveyor.

### DESCRIPTION OF THE DRAWINGS

In order to complement the description being carried out and with the purpose of helping towards a better understanding of the characteristics of the invention, in accordance with a preferred example of practical embodiment thereof, a set of drawing is attached as an integral part of said description, wherein the following, in an illustrative and non-limitative character, has been represented:
Figure 1 shows a general perspective view of the equipment for inspecting persons and luggage, duly assembled and functional.

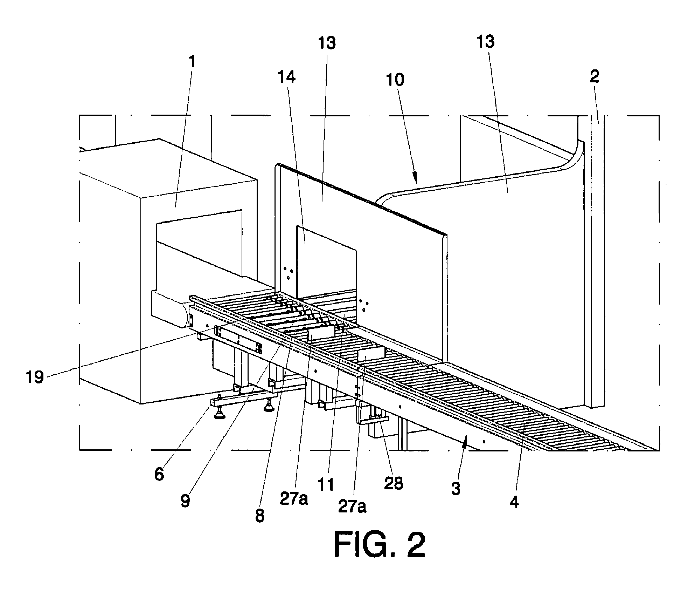

Figure 2 shows a perspective view of the admission conveyor at the entrance of the X-Ray machine, wherein the section where new trays coming from the personal inspection area are introduced can be observed.
Figure 3 shows a perspective view similar to the previous one, without the closure panels of the personal inspection area wherein the make-up of the device for transferring trays to the admission conveyor can be observed.
Figure 4 shows a perspective view of the device for transferring the trays to the admission conveyor, also lacking the rollers of the conveyor, with the arms duly sloped to transfer the tray.

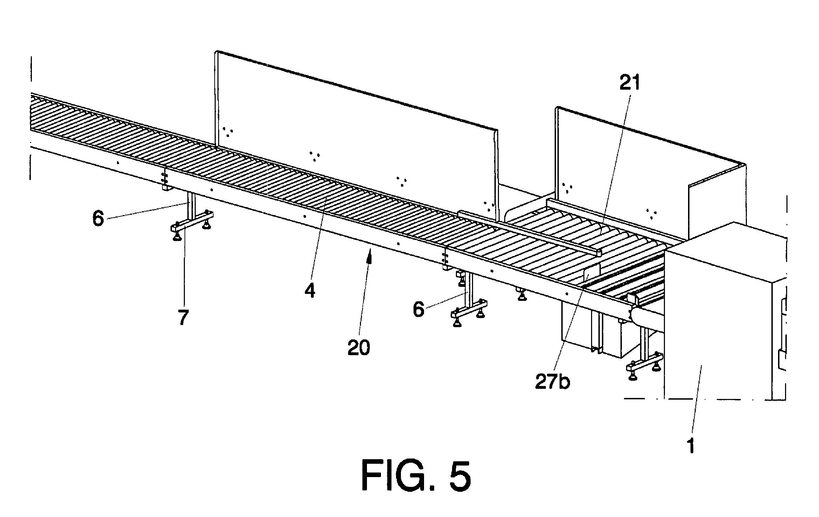

Figure 5 shows a perspective view of the tray collection conveyor at the outlet of the X-Ray machine, wherein the secondary conveyor for redirecting the trays carrying suspicious objects for their additional inspection can be observed.
Figure 6 shows a perspective view of the device for transferring the trays from the collection conveyor to the secondary conveyor, without all of the accessory elements.
Figure 7 shows a view similar to the previous one but with the transfer device actuated in order to transfer the tray to the secondary conveyor.

### PREFERRED EMBODIMENT OF THE INVENTION

In view of the figures, a preferred embodiment of the equipment for inspecting persons and luggage for accessing restricted areas which constitutes the object of this invention is described below.

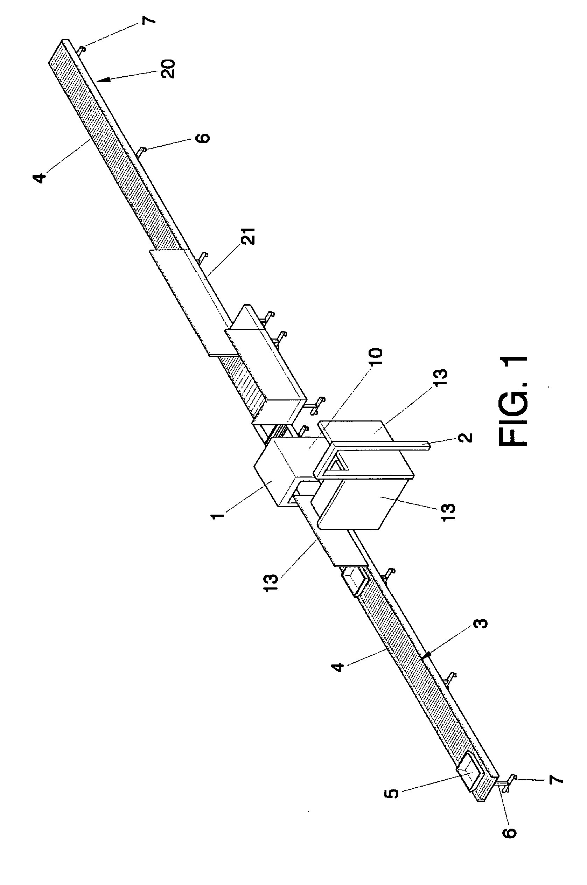

As can be observed in figure 1, the equipment for inspecting people and luggage for accessing restricted areas comprises an X-Ray machine (1) for inspecting luggage, and a walk through gate detector (2) for detecting the presence of metal objects on people. For the inspection of the luggage through the X-Ray machine, it has an admission conveyor (3), provided on its surface with a plurality of rollers (4) for moving the trays (5) containing the luggage and personal objects towards the entrance of the X-Ray machine (1). In the present example of embodiment, the admission conveyor (3) is 8-metres long and the displacement speed of the trays (5) is 0.10 metres/second. Likewise, the present admission conveyor (3) is constructed in three independent sections to facilitate its transferral and assembly. Each one of the admission conveyor (3) sections is equipped with a pair of support legs (6) provided with adjustable bases (7) to permit a correct levelling.

As previously indicated, the movement of the trays (5) along the admission conveyor is carried out automatically by means of the arrangement of motorized rollers (8), through a drive motor disposed inside the roller (8), which is caused to rotate, in the present example of embodiment, by nine rollers (4) by means of connection belts (9). The regulation of the drive motor of the motorized rollers (8) will determine the displacement speed of the trays (5) along the admission conveyor (3).

The inspection of persons is carried out by means of the walk through gate detector (2) disposed in an upstream position with respect to the X-Ray machine (1), with the object of creating a personal inspection area (10) provided with access to the admission conveyor (3) at a span before the entrance to the X-Ray machine, for transferring trays (5) with the objects detected during the individual inspection. In this way, the individual inspection of the person carrying a metal object in the personal inspection area does not interfere with the inspection process of the persons who are behind them.

Said inspection area comprises a table (11) provided with an extension to place a tray (5) with the metal objects detected on the person, and a device (12) for transferring said tray to the admission conveyor (3), on the section before the X-Ray machine (1). For security reasons, the inspection area is closed by means of panels (13), having been provided with an opening (14) in the panel coinciding with the admission conveyor (3), for the passage of the trays (5).

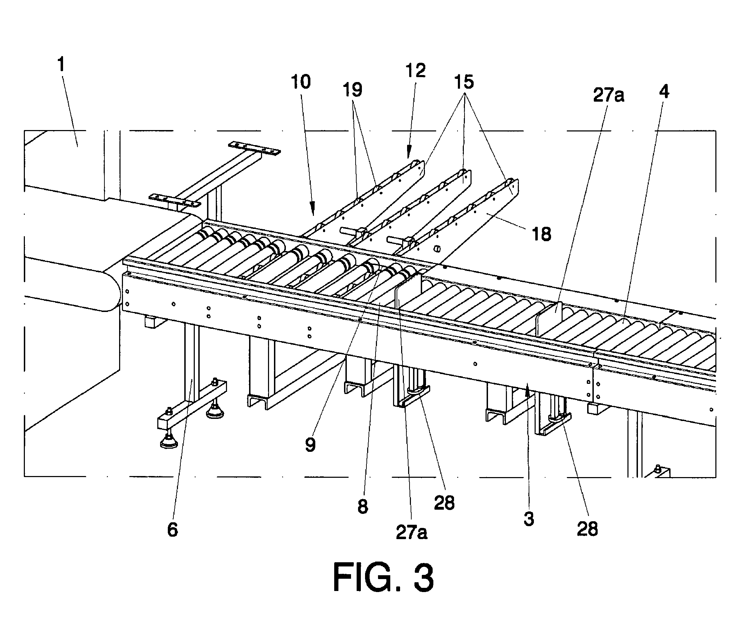

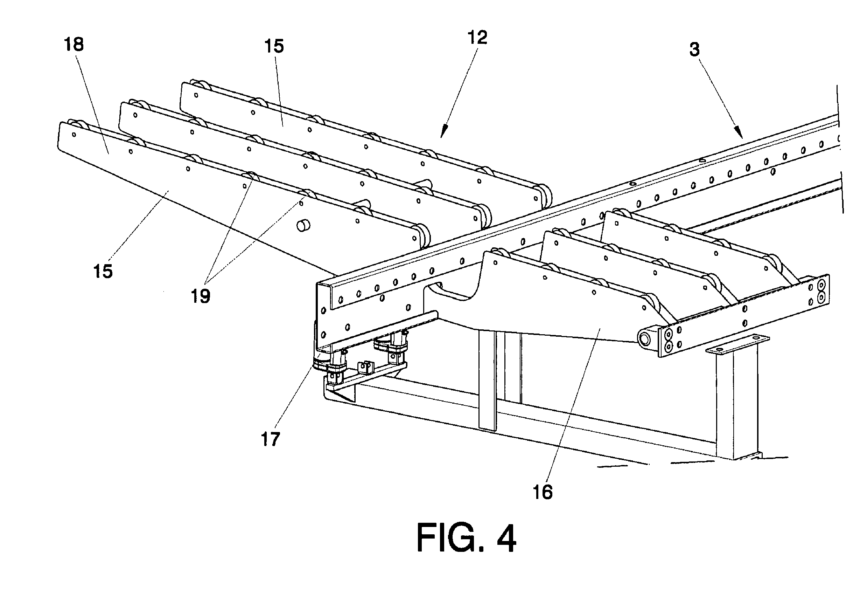

As can be observed in figures 3 and 4, the device (12) for transferring trays (5) to the admission conveyor (3) from the inspection area (10) is made up of three arms (15) disposed transversally and articulated at one end (16) to the outer edge of the admission conveyor (3), actuated by an electric or pneumatic linear actuator (17), which causes the free ends (18) of the arms (15) to emerge through the table (11) and rollers (4). The upper edges of the arms (15) are provided with bearings (19) to facilitate the movement of the tray (5) towards the admission conveyor (3). Once the metal objects have been placed on the tray (5), the transfer device (12) is automatically actuated, the ends (18) of the arms (15) emerging through the table (11), for sliding the tray (5) along the bearings (19) towards the admission conveyor. In the event that there was a tray (5) occupying said position on the admission conveyor (3) at this exact moment, the transfer of the new tray (5) would be stopped until the previous one enters the X-Ray machine (1).

Once the person has been inspected, the process continues with the inspection of the luggage in the X-Ray machine. If this second checkpoint does not detect any suspicious object, the person will pick up their luggage and personal objects from the collection conveyor (20). In the present example of embodiment, the collection conveyor (20) is made up of three sections with a total length of 9 metres. Likewise, each one of the sections is equipped with a pair of support legs (6) provided with adjustable bases (7) to permit a correct levelling. The collection conveyor (20) is provided on its surface with a plurality of open rotational rollers (4) and equipped with a slight descending slope to facilitate the movement of the trays (5) via gravity.

In the cases wherein the X-Ray machine (1) detects a suspicious object in a piece of luggage, the equipment comprises a secondary conveyor (21) disposed parallel to the collection conveyor (20), right after the X-Ray machine (1), to re-direct the trays with suspicious luggage and make an additional inspection thereof. Likewise, it comprises a device (22) for automatically transferring the trays (5) from the collection conveyor (20) to the secondary conveyor (21).

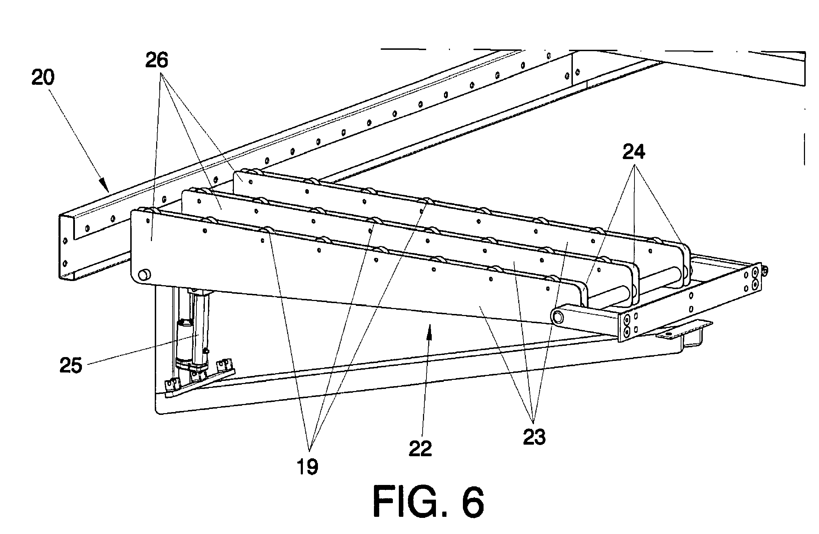

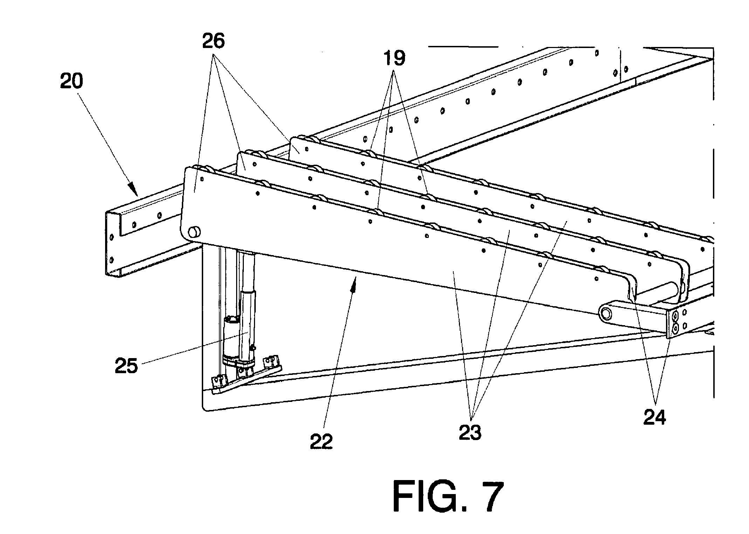

As can be observed in figures 6 and 7, the transfer device (22) for redirecting the trays with suspicious luggage to the secondary conveyor (21) is made up of three arms (23) arranged transversally and articulated at one end (24) to the outer edge of the secondary conveyor (21), actuated by an electric or pneumatic linear actuator (25), which cause the free ends (26) of the arms (23) to emerge through the rollers (4). Also, the upper edges of the arms (23) are provided with bearings (19) to facilitate the sliding of the tray (5) towards the secondary conveyor (21).

Both the admission conveyor (3) and the collection conveyor (20) comprise retractable retainers (27a, 27b) which emerge from between the rollers (4) and which are actuated by electrical or pneumatic linear actuators (29) to slow down the advancement of the trays (5) at a specific moment. In the admission conveyor (3), said brake retainers (27a) are disposed on a section before the inspection area (10) to permit the entry of new trays (5) coming from the transfer device (12), as well as to be able to regulate the entry of trays to the X-Ray machine (1). In the collection conveyor (20), after the transfer device (22), it also has a retractable retainer (27b), to prevent trays (5) containing suspicious luggage from being sent to the outlet of the X-Ray machine (1).

Finally, it must be mentioned that the equipment comprises a conveyor belt, not represented in the drawings, for returning the empty trays from the final end of the collection conveyor (23) to the starting end of the admission conveyor (3).

## Claims

1. Equipment for inspecting persons and luggage for accessing restricted areas which comprises an X-Ray machine (1) for controlling the content of hand luggage and a walk through gate detector (2) for detecting the presence of metal objects on people, additionally comprising:
- an admission conveyor (3) provided with motorized means for moving the trays (3) containing the person's luggage and personal objects, disposed at the entrance of the X-Ray machine (1), of a length between 5 and 10 metres,
- the walk through gate detector (2) being in an upstream position with respect to the X-Ray machine (1) to create a personal inspection area (10) wherein the individual inspection of the person carrying a metal object can be carried out, as well as the introduction of an additional tray (5) with the metal objects detected, on the admission conveyor (3), on a section before the X-Ray machine (1),
- a collection conveyor (20) for collecting the trays (5) containing luggage and personal objects, disposed at the outlet of the X-Ray machine (1), of a length between 2 and 15 metres,
- a secondary conveyor (21) between 2 and 3 metres long, disposed parallel to the tray (5) collection conveyor (20), right after the X-Ray machine (1), provided with a device for transferring the trays (22) from the collection conveyor (20) to the secondary conveyor (21), in order to re-direct the trays (5) with suspicious luggage for their additional inspection.

2. Equipment for inspecting persons and luggage for accessing restricted areas, according to claim 1, **characterized in that** the motorized means for moving the trays (5) along the admission conveyor (3) comprises a plurality of rollers (8) provided with a rotational drive motor.

3. Equipment for inspecting persons and luggage for accessing restricted areas, according to claim 2, **characterized in that** each motorized roller (8) actuates up to 9 free rollers (4) by means of belts (9).

4. Equipment for inspecting persons and luggage for accessing restricted areas, according to claim 1, **characterized in that** the displacement speed of the trays (5) along the admission conveyor (3), determined by the motorized means, is of between 0.10 metres/second and 0.30 metres/second.

5. Equipment for inspecting persons and luggage for accessing restricted areas, according to claim 1, **characterized in that** the personal inspection area (10) comprises a table (11) for placing the tray (5) with the metal objects detected, provided with a device (12) for their transfer to the admission conveyor (3), on the section before the X-Ray machine (1).

6. Equipment for inspecting persons and luggage for accessing restricted areas, according to claim 5, **characterized in that** the tray (5) transfer device (12) to the collection conveyor (3) comprises a series of articulated arms (15) actuated by means of pneumatic or electric linear actuators (17), the ends (18) whereof emerging from the table (11) and moving the tray (5) towards the admission conveyor (3) to be inspected in the X-Ray machine (1).

7. Equipment for inspecting persons and luggage for accessing restricted areas, according to claim 1, **characterized in that** the collection conveyor (20) comprises a plurality of free rotational rollers (4), the conveyor (20) whereof being provided with a slight descending slope for displacing the trays (5) via gravity.

8. Equipment for inspecting persons and luggage for accessing restricted areas, according to claim 1, **characterized in that** the device for transferring (22) trays (5) from the collection conveyor (20) to the secondary conveyor (21), in order to re-direct the trays (5) with suspicious luggage, comprises a series of articulated arms (23) actuated by means of electric or pneumatic linear actuators (24), the ends (26) whereof emerging from between the rollers (4) of the collection conveyor (20) and being disposed at the outlet of the X-Ray machine (1) and which move the trays (5) towards the secondary conveyor (21), for their additional inspection.

9. Equipment for inspecting persons and luggage for accessing restricted areas, according to claim 1, **characterized in that** the admission conveyor (3) comprises at least one retractable retainer (27a) which emerges from between the rollers (4), actuated by an electric or pneumatic actuator (28) to slow down the advancement of the trays (5) to the entrance of the X-Ray machine (1), disposed before the personal inspection are (10).

10. Equipment for inspecting persons and luggage for accessing restricted areas, according to claim 1, **characterized in that** the collection conveyor (20) comprises a retractable retainer (27b) which emerges from between the rollers (4), actuated by an electric or pneumatic actuator (28) to prevent trays (5) containing suspicious luggage from being sent to the outlet of the X-Ray machine (1), disposed after the means of transferring (22) trays (5) to the secondary conveyor (21).

11. Equipment for inspecting persons and luggage for accessing restricted areas, according to claim 1, **characterized in that** it additionally comprises a conveyor belt for returning the empty trays (5) from the final end of the collection conveyor (20) to the starting end of the admission conveyor (3).

## Patentansprüche

1. Vorrichtung zur Kontrolle von Personen und Gepäck beim Zugang zu eingeschränkten Bereichen, die einen Röntgenapparat (1) zur Kontrolle des Inhalts von Handgepäck und einen Durchgangsschleusendetektor (2) zur Erkennung des Vorhandenseins von Metallgegenständen an Personen einschließt und die darüber hinaus Folgendes umfasst:
- ein Zufuhrförderband (3), das mit einem motorisierten Mittel zur Bewegung der Schalen (3) ausgestattet ist, die das Gepäck und die persönlichen Gegenstände der Person enthalten, wobei dieses am Eingang zum Röntgenapparat (1) angeordnet ist und eine Länge zwischen 5 und 10 Metern besitzt,
- wobei der Durchgangsschleusendetektor (2) sich gegenüber dem Röntgenapparat (1) in einer vorgelagerten Position befindet, um einen Personenkontrollbereich (10) zu schaffen, in dem die individuelle Kontrolle von Personen, die Metallgegenstände bei sich tragen, sowie die Einführung einer zusätzlichen Schale (5) mit den erkannten Metallgegenständen auf das Zufuhrförderband (3) in einem Abschnitt vor dem Röntgenapparat (1) durchgeführt werden kann,
- ein Sammelförderband (20) zur Sammlung der Schalen (5) mit Gepäck und persönlichen Gegenständen, das am Ausgang des Röntgenapparats (1) angeordnet ist und eine Länge zwischen 2 und 15 Metern besitzt,
- ein zwischen 2 und 3 Metern langes Hilfsförderband (21), das parallel zum Sammelförderband (20) der Schalen (5) direkt nach dem Röntgenapparat (1) angeordnet und mit einer Vorrichtung zum Transfer der Schalen (22) vom Sammelförderband (20) zum Hilfsförderband (21) ausgestattet ist, um die Schalen (5) mit verdächtigem Gepäck zu deren zusätzlicher Kontrolle umzuleiten.

2. Vorrichtung zur Kontrolle von Personen und Gepäck beim Zugang zu eingeschränkten Bereichen nach Anspruch 1, **dadurch gekennzeichnet, dass** das motorisierte Mittel zur Bewegung der Schalen (5) entlang des Zufuhrförderbands (3) eine Vielzahl von Rollen (8) umfasst, die mit einem Rotationsantriebsmotor ausgestattet sind.

3. Vorrichtung zur Kontrolle von Personen und Gepäck beim Zugang zu eingeschränkten Bereichen nach Anspruch 2, **dadurch gekennzeichnet, dass** jede motorisierte Rolle (8) bis zu 9 freie Rollen (4) mittels Riemen (9) betätigt.

4. Vorrichtung zur Kontrolle von Personen und Gepäck beim Zugang zu eingeschränkten Bereichen nach Anspruch 1, **dadurch gekennzeichnet, dass** die von dem motorisierten Mittel bestimmte Verschiebegeschwindigkeit der Schalen (5) entlang des Zufuhrförderbands (3) zwischen 0,10 Metern/Sekunde und 0.30 Metern/Sekunde liegt.

5. Vorrichtung zur Kontrolle von Personen und Gepäck beim Zugang zu eingeschränkten Bereichen nach Anspruch 1, **dadurch gekennzeichnet, dass** der Personenkontrollbereich (10) einen Tisch (11) umfasst, um die Schale (5) mit den erkannten Metallgegenständen zu platzieren, der mit einer Vorrichtung (12) für deren Transfer zum Zufuhrförderband (3) auf den Abschnitt vor dem Röntgenapparat (1) ausgestattet ist.

6. Vorrichtung zur Kontrolle von Personen und Gepäck beim Zugang zu eingeschränkten Bereichen nach Anspruch 5, **dadurch gekennzeichnet, dass** die Vorrichtung (12) zum Transfer der Schalen (5) zum Sammelförderband (3) eine Reihe von gelenkig angeordneten Armen (15) umfasst, die mittels pneumatischen oder elektrischen linearen Stellgliedern (17) betätigt werden, deren Enden (18) aus dem Tisch (11) herausragen und die Schalen (5) in Richtung des Zufuhrförderbands (3) bewegen, damit diese im Röntgenapparat (1) kontrolliert werden.

7. Vorrichtung zur Kontrolle von Personen und Gepäck beim Zugang zu eingeschränkten Bereichen nach Anspruch 1, **dadurch gekennzeichnet, dass** das Sammelförderband (20) eine Vielzahl von frei drehbaren Rollen (4) umfasst, wobei das Förderband (20) derselben mit einem leichten Gefälle zur Verschiebung der Schalen (5) mittels der Schwerkraft ausgestattet ist.

8. Vorrichtung zur Kontrolle von Personen und Gepäck beim Zugang zu eingeschränkten Bereichen nach Anspruch 1, **dadurch gekennzeichnet, dass** die Vorrichtung (22) zum Transfer der Schale (5) vom Sammelförderband (20) zum Hilfsförderband (21), um die Schale (5) mit verdächtigem Gepäck umzuleiten, eine Reihe von gelenkig angeordneten Armen (23) umfasst, die mittels pneumatischen oder elektrischen linearen Stellgliedern (24) betätigt werden, deren Enden (26) zwischen den Rollen (4) des Sammelförderbands (20) herausragen, und wobei diese am Ausgang des Röntgenapparats (1) angeordnet sind und die Schale (5) zu deren zusätzlicher Kontrolle in Richtung des Hilfsförderbands (21) bewegen.

9. Vorrichtung zur Kontrolle von Personen und Gepäck beim Zugang zu eingeschränkten Bereichen nach Anspruch 1, **dadurch gekennzeichnet, dass** das Zufuhrförderband (3) mindestens eine rückziehbare Haltevorrichtung (27a) umfasst, die zwischen den Rollen (4) herausragt und von einem elektrischen oder pneumatischen Stellglied (28) betätigt wird, um die Beförderung der Schalen (5) zum Eingang des Röntgenapparats (1) zu verlangsamen, wobei diese vor dem Personenkontrollbereich (10) angeordnet ist.

10. Vorrichtung zur Kontrolle von Personen und Gepäck beim Zugang zu eingeschränkten Bereichen nach Anspruch 1, **dadurch gekennzeichnet, dass** das Sammelförderband (20) eine rückziehbare Haltevorrichtung (27b) umfasst, die zwischen den Rollen (4) herausragt und von einem elektrischen oder pneumatischen Stellglied (28) betätigt wird, um die Schalen (5) mit verdächtigem Gepäck daran zu hindern, an den Ausgang des Röntgenapparats (1) gesendet zu werden, wobei dieses nach dem Mittel (22) zum Transfer der Schalen (5) an das Hilfsförderband (21) angeordnet ist.

11. Vorrichtung zur Kontrolle von Personen und Gepäck beim Zugang zu eingeschränkten Bereichen nach Anspruch 1, **dadurch gekennzeichnet, dass** diese zusätzlich ein Förderband zur Rückführung der leeren Schalen (5) vom Ende des Sammelförderbands (20) zum Beginn des Zufuhrförderbands (3) umfasst.

## Revendications

1. Équipement d'inspection des personnes et des bagages pour accéder à des zones d'accès règlementé qui comprend une machine à rayon X (1) pour contrôler le contenu des bagages à main et un portique de détection (2) pour détecter la présence d'objets métalliques sur les personnes, comprenant en outre :
- un convoyeur d'admission (3) pourvu de moyens motorisés pour déplacer les plateaux (3) contenant les bagages et objets personnels de la personne, disposé à l'entrée de la machine à rayon X (1), d'une longueur comprise entre 5 et 10 mètres,
- le portique de détection (2) étant en amont par rapport à la machine à rayon X (1) pour créer une zone d'inspection personnelle (10) dans laquelle l'inspection individuelle de la personne portant un objet métallique peut être réalisée, ainsi que l'introduction d'un plateau supplémentaire (5) avec les objets métalliques détectés, sur le convoyeur d'admission (3), sur une section précédant la machine à rayon X (1),
- un convoyeur de collecte (20) pour collecter les plateaux (5) contenant des bagages et objets personnels, disposé à la sortie de la machine à rayon X (1), d'une longueur comprise entre 2 et 15 mètres,
- un convoyeur secondaire (21) mesurant entre 2 et 3 mètres de long, disposé parallèlement au convoyeur de collecte (20) de plateau (5), juste après la machine à rayon X (1), pourvu d'un dispositif pour transférer les plateaux (22) du convoyeur de collecte (20) au convoyeur secondaire (21), afin de rediriger les plateaux (5) avec bagages suspects afin qu'ils fassent l'objet d'une inspection supplémentaire.

2. Équipement d'inspection des personnes et des bagages pour accéder à des zones d'accès règlementé, selon la revendication 1, **caractérisé en ce que** le moyen motorisé pour déplacer les plateaux (5) le long du convoyeur d'admission (3) comprend une pluralité of rouleaux (8) pourvus d'un moteur d'entraînement rotatif.

3. Équipement d'inspection des personnes et des bagages pour accéder à des zones d'accès règlementé, selon la revendication 2, **caractérisé en ce que** chaque rouleau motorisé (8) actionne jusqu'à 9 rouleaux libres (4) au moyen de courroies (9).

4. Équipement d'inspection des personnes et des bagages pour accéder à des zones d'accès règlementé, selon la revendication 1, **caractérisé en ce que** la vitesse de déplacement des plateaux (5) le long du convoyeur d'admission (3), déterminée par le moyen motorisé, se situe entre 0,10 mètres/seconde et 0,30 mètres/seconde.

5. Équipement d'inspection des personnes et des bagages pour accéder à des zones d'accès règlementé, selon la revendication 1, **caractérisé en ce que** la zone d'inspection personnelle (10) comprend une table (11) pour placer le plateau (5) avec les objets métalliques détectés, pourvue d'un dispositif (12) pour leur transfert jusqu'au convoyeur d'admission (3), sur la section précédant la machine à rayon X (1).

6. Équipement d'inspection des personnes et des bagages pour accéder à des zones d'accès règlementé, selon la revendication 5, **caractérisé en ce que** le dispositif de transfert (12) de plateau (5) jusqu'au convoyeur de collecte (3) comprend une série de bras articulés (15) actionnés au moyen d'actionneurs linéaires pneumatiques ou électriques (17), dont les extrémités (18) émergent de la table (11) et déplacent le plateau (5) en direction du convoyeur d'admission (3) pour qu'il soit inspecté dans la machine à rayon X (1).

7. Équipement d'inspection des personnes et des bagages pour accéder à des zones d'accès règlementé, selon la revendication 1, **caractérisé en ce que** le convoyeur de collecte (20) comprend une pluralité de rouleaux rotatifs libres (4), dont le convoyeur (20) comporte une pente légèrement descendante pour le déplacement des plateaux (5) par gravité.

8. Équipement d'inspection des personnes et des bagages pour accéder à des zones d'accès règlementé, selon la revendication 1, **caractérisé en ce que** le dispositif de transfert (22) des plateaux (5) depuis le convoyeur de collecte (20) jusqu'au convoyeur secondaire (21), afin de rediriger les plateaux (5) avec un bagage suspect, comprend une série de bras articulés (23) actionnés au moyen d'actionneurs linéaires électriques ou pneumatiques (24), dont les extrémités (26) émergent entre les rouleaux (4) du convoyeur de collecte (20) et sont disposées à la sortie de la machine à rayon X (1) et qui déplacent les plateaux (5) en direction du convoyeur secondaire (21), pour qu'ils fassent l'objet d'une inspection supplémentaire.

9. Équipement d'inspection des personnes et des bagages pour accéder à des zones d'accès règlementé, selon la revendication 1, **caractérisé en ce que** le convoyeur d'admission (3) comprend au moins un dispositif de retenue rétractable (27a) qui émerge entre les rouleaux (4), actionné par un actionneur électrique ou pneumatique (28) pour ralentir l'avancement des plateaux (5) à l'entrée de la machine à rayon X (1), installée avant la zone d'inspection personnelle (10).

10. Équipement d'inspection des personnes et des bagages pour accéder à des zones d'accès règlementé, selon la revendication 1, **caractérisé en ce que** le convoyeur de collecte (20) comprend un dispositif de retenue (27b) qui émerge entre les rouleaux (4), actionné par un actionneur électrique ou pneumatique (28) pour empêcher les plateaux (5) contenant un bagage suspect d'être envoyés à la sortie de la machine à rayon X (1), disposé après le moyen de transfert (22) des plateaux (5) jusqu'au convoyeur secondaire (21).

11. Équipement d'inspection des personnes et des bagages pour accéder à des zones d'accès règlementé, selon la revendication 1, **caractérisé en ce qu'**il comprend en outre une courroie de convoyeur pour renvoyer les plateaux vides (5) de l'extrémité de fin du convoyeur de collecte (20) jusqu'à l'extrémité de départ du convoyeur d'admission (3).
